Europäisches Patentamt

European Patent Office

Office européen des brevets

(19)

(11) Publication number: 0 486 732 A1

# EUROPEAN PATENT APPLICATION

(12)

(21) Application number: 90312592.0

(22) Date of filing: 20.11.90

(51) Int. Cl.⁵: G02B 21/06, G02B 21/00

(43) Date of publication of application:
27.05.92 Bulletin 92/22

(84) Designated Contracting States:
AT BE CH DE DK ES FR GB GR IT LI LU NL SE

(71) Applicant: HATFIELD POLYTECHNIC
College Lane
Hatfield, Herts. AL10 9AB(GB)

(72) Inventor: Ulanowski, Zbigniew Jozef
33 St. Albans Road East
Hatfield, Herts. AL10 0EJ(GB)

(74) Representative: Sommerville, John Henry et al
SOMMERVILLE & RUSHTON 11 Holywell Hill
St. Albans Hertfordshire, AL1 1EZ(GB)

(54) Optical microscopes.

(57) A microscope is provided with a supplementary means for producing a light spot in the object plane of the microscope objective lens. The supplementary means comprises a light source from which a collimated light beam is derived, a focusing lens receiving the collimated beam and a coupling lens disposed between said first lens and the objective lens. The supplementary means has the following features:
(i) the focal point of the focusing lens is in the plane of the image of a specimen in said object plane as obtained through the objective lens and the coupling lens, (ii) the light beam fills the clear aperture of the objective lens without substantial light loss and (iii) the focusing lens is movable in a plane perpendicular to its axis to the light spot in the object plane of the objective lens, the parameters of the system are such that the axial ray of light from the light source always passes through the second principal point (i.e. that on the object side) of the objective lens. In one embodiment the focusing lens and the light source are movable together perpendicularly to said axis. In a second embodiment the focusing lens is movable perpendicularly to said axis relatively to the collimated light beam.

Fig. 1

EP 0 486 732 A1

This invention relates to optical microscopes having supplementary means for delivering a beam of light into an optical microscope so that:

a) the said beam is focused into a small spot in the object plane of the microscope objective lens;

b) the said spot can be moved freely within the said object plane.

More particularly, but not exclusively, the invention is intended to be used in conjunction with a semiconductor laser to produce a spot of light small enough to create electromagnetic gradient forces for trapping micro-particles and living cells.

In certain applications involving the use of optical microscopes there arises a need to focus a small spot of light on to a specimen under observation. Possible uses include irradiating small specimens with laser light, trapping micro-particles in optical gradient force traps. Such spots can be obtained by introducing light from a secondary source such as a semi-conductor laser into the optical path of the microscope and using the objective lens to focus the light. Additionally, some means of manipulating the position of the spot of light within the field of view of the microscope should be provided.

According to the invention a microscope is provided with a supplementary means for producing a light spot S in the object plane of the microscope objective lens, the means comprising a light source from which a collimated light beam is derived, a focusing lens L1 receiving the collimated beam and a coupling lens L2 disposed between said first lens L1 and the objective lens MO whereby a light spot is produced from said collimated beam in the object plane of the objective lens MO, (i) the focal point F of the focusing lens L1 being in the plane of the image of a specimen in said object plane as obtained through the objective lens MO and the coupling lens L2, (ii) the light beam filling the clear aperture of the objective lens MO without substantial light loss and (iii) the focusing lens L1 being movable in a plane perpendicular to its axis to displace the light spot S in the object plane of the objective lens MO, the parameters of the system being such that the axial ray of light from said light source always passes through the second principal point (i.e. that on the object side) of the objective lens MO.

The focusing lens L1 may additionally be capable of limited movement parallel to its axis so that the light spot is displaced a short distance from the object plane of the objective lens MO.

In a first embodiment the light source is moved together with the focusing lens L1 perpendicularly to said axis. In a second embodiment of the invention, the focusing lens L1 is movable perpendicularly to said axis relatively to the collimated light beam.

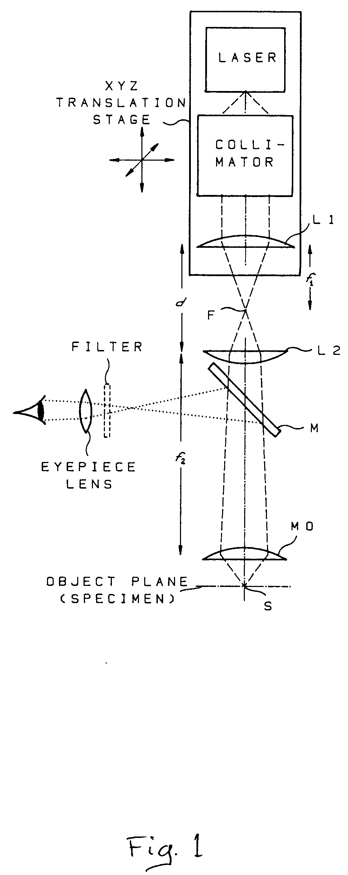

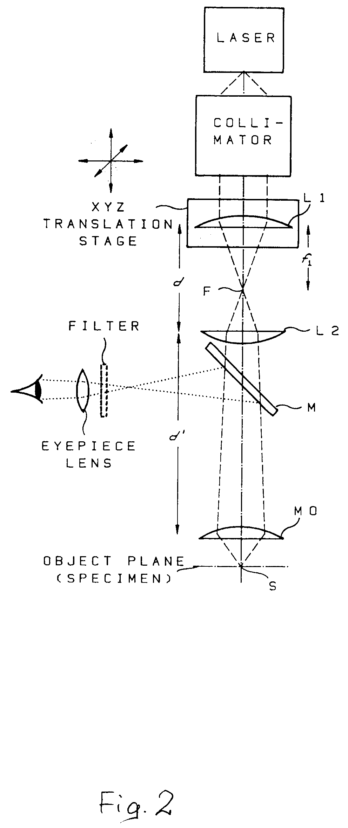

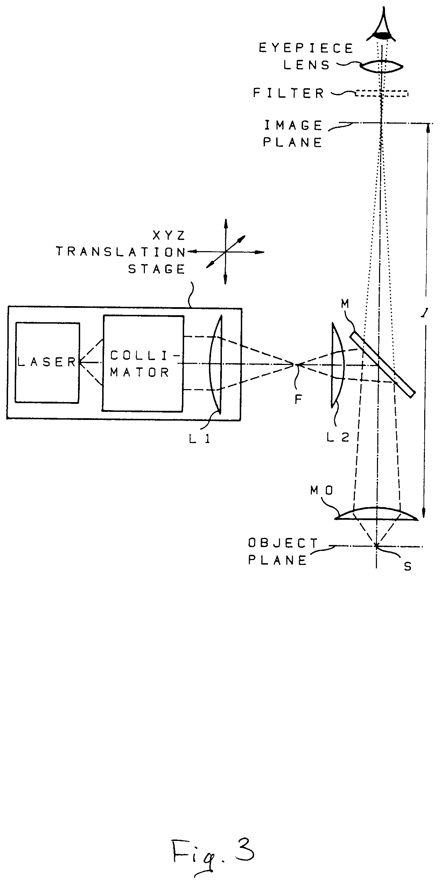

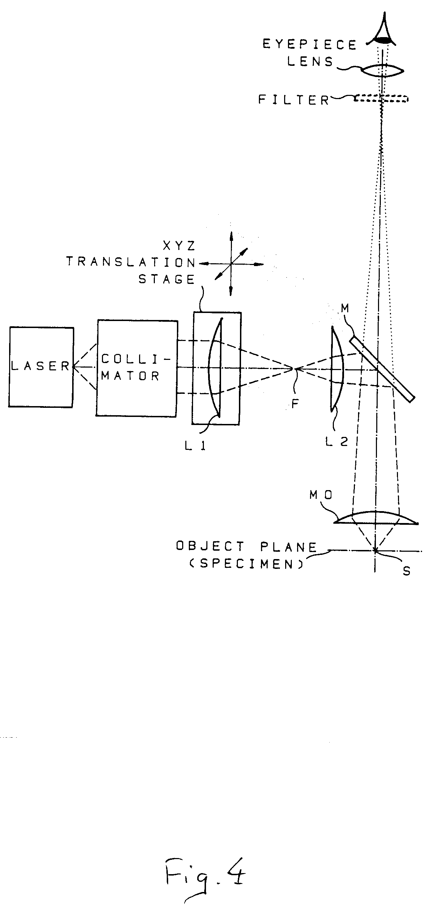

The invention will now be further explained by way of example with reference to the two aforesaid embodiments which are shown in Figures 1 and 2 respectively of the accompanying annotated drawings. Figures 3 and 4 of the drawings show modifications of the Figures 1 and 2 systems respectively.

In order to efficiently focus light into a small spot one should utilise the whole clear aperture of the lens used for focusing. For example, for the case of a gaussian laser beam the size of the spot will be:

$$D = \frac{4}{\pi} \frac{\lambda f}{\phi}$$

(1)

where

$\lambda$ - wavelength of light,

f - focal length of the lens,

$\phi$ - beam diameter at the lens.

A beam narrower than the aperture would not produce a spot of the minimum (i.e. diffraction limited) size. Conversely, a wider beam would result in a loss of light power. The above should be true regardless of the position or the spot, i.e. whether it is displaced away from the optical axis or not. In the present invention the above requirements are met by ensuring that:

a) the beam is expanded to fill the clear aperture of the objective lens;

b) the axial ray of light emerging from the light source always passes through the second (i.e. object side) principal point of the objective lens.

Further, the focal point F of the focusing lens L1 is arranged in the plane of the image of the specimen as obtained through the objective lens MO and the coupling lens L2. This has the effect of adapting a parallel beam of light to the finite conjugate ratio of the majority of microscope objective lenses by making the beam divergent.

The light produced by a semi-conductor laser can be collimated by means of lenses, prisms or a combination of both into a beam of circular cross-section. Such a beam can have divergence sufficiently low

2

that it results in an additional contribution to the size of the final spot of light produced by the present invention comparable in magnitude or smaller than the size pertaining to formula (1). Thus when the present invention is used in conjunction with a semi-conductor laser and a collimator producing a quasi-parallel beam of sufficiently low divergence the size of the spot of light can be close to or less than 1 $\mu$m.

The optical systems of the two embodiments have the following features:

1. The focal point F of the focusing lens L1 as stated above is in, or close to, the plane of the image of the specimen in the objective lens MO and the coupling lens L2. If the lens L1 is a positive one the focal point F is the second (rear) focal point; if it is a negative one the focal point F (imaginary) is the first (front) focal point. In the second embodiment the lens L1 must be positive.

2. The laser beam fills the whole aperture of the microscope objective lens MO, irrespectively of the deflection of the beam. This is achieved by a judicious choice of the focal lengths of the lenses used.

3. In the first embodiment the second (object side) principal point of the microscope objective lens MO coincides with the second focal point of the coupling lens L2.

4. In the second embodiment the focusing lens L1 and the second (object side) principal point of the microscope objective lens MO are in the conjugate planes of the coupling lens L2.

5. The mirror M allows viewing the specimen and is such that it reflects a substantial part of the visible light originating from the specimen and transmits a substantial part of the light emitted by the laser.

6. In the first embodiment the laser, collimator and focusing lens assembly can be moved as a unit in the plane perpendicular to the optical axis of the said assembly whereby the focused light spot S is moved within the object plane of the microscope by an amount proportional to but generally smaller than the displacement of the said assembly. If desired the said assembly may also be made capable of displacement parallel to the said axis the said displacement resulting in a respective displacement of the said light spot S away from the said object plane.

7. In the second embodiment the focusing lens L1 can be displaced in the plane perpendicular to the optical axis of the said lens and possibly it can also be displaced parallel to the said axis the respective displacements having the same influence on the position of the focused light spot S as in point 6 above.

The formulae for the first embodiment may be derived as follows. It is assumed that all distances are measured between appropriate principal points of the lenses.

The diameter $\phi_2$ of the laser beam in the plane of the coupling lens L2 is described by:

$$\phi_2 = \phi_1(d/|f_1|-1) \qquad (2)$$

where:

$\phi_1$ - original diameter of the laser beam,

d - distance between the lenses L1 and L2,

$f_1$ - focal length of the lens L1 (note that $f_1$ is negative for a negative-power lens).

The virtual image of the focal point F in the lens L2 is formed at the distance $\ell$ from the objective lens MO (see Fig. 3). Because the distance between L2 and MO is equal to $f_2$ the lens equation for the lens L2 takes the form:

$$1/f_2 = 1/(d-f_1)-1/(\ell-f_2) \qquad (3)$$

The diameter $\phi$ of the beam in the plane of the lens MO is:

$$\phi = \ell\phi_2/(\ell-f_2) \qquad (4)$$

By combining equations (2), (3) and (4) we obtain the expression:

$$f_2/|f_1| = \phi/\phi_1 \qquad (5)$$

which allows choosing the focal lengths of the lenses given the collimated beam diameter and the diameter $\phi$ which is determined by the size of the clear aperture of the objective lens MO. The latter can be calculated with the aid of the approximate formula:

$$\phi \simeq 2Nf_3/n \qquad (6)$$

where N and $f_3$ are, respectively, the numerical aperture and the focal length of the objective lens MO and n is the refractive index of the medium in which the specimen is immersed. It must be remembered that the

focal length $f_2$ determines the distance between the coupling lens L2 and the objective lens MO. Having chosen the focal lengths, one can obtain the distance d between the focusing lens L1 and the coupling lens L2 from formula (2) (note again that $f_1$ can be either positive or negative, depending on the type of the lens L1). The length $\ell$ is equal to the object-to-image distance of the microscope (usually 195mm) less the focal length $f_3$ of the objective lens.

The formulae for the second embodiment may be derived as follows. It is again assumed that all distances are measured between appropriate principal points of the lenses.

The diameter $\phi_2$ of the laser beam in the plane of the coupling lens L2 is described by the equation:

$$\phi_2 = \phi_1(d/f_1 - 1) \qquad (7)$$

where:

$\phi_1$ -    original diameter of the laser beam,
d -    distance between the lenses L1 and L2,
$f_1$ -    focal length of the lens L1.

Because the lenses L1 and MO are in the conjugate planes of the lens L2 the lens equation for the lens L2 can now be written as:

$$1/f_2 = 1/d + 1/d' \qquad (8)$$

where d' is the distance between the lenses L2 and MO. We also have:

$$1/f_2 = 1/(d-f_1) - 1/(\ell-d') \qquad (9)$$

since the virtual image of the focal point F in the lens L2 is formed at the distance 1 from the objective lens MO. The diameter $\phi$ of the beam in the plane of the lens MO is:

$$\phi = \frac{\phi_2}{1 - d'/\ell} \qquad (10)$$

By combining equations (7), (8), (9) and (10) we obtain:

$$d'/f_2 = \phi/\phi_1 + 1 \qquad (11)$$

Having chosen d' and $f_2$ one can calculate d from formula (8) and $f_1$ from formula (9).

In a modification of the present invention shown in Figures 3 and 4 the viewing path and laser beam path have been interchanged as compared with Figures 1 and 2 respectively. Also therefore the mirror M should transmit a substantial part of the visible light originating from the specimen and reflect a substantial part of the light emitted by the laser.

In a further modification of the above described embodiments the mirror M can be such that it reflects most of the visible light (used for viewing) and transmits most of the laser light (used for producing the light spot) in the case of the embodiments shown in Figures 1 and 2. Again, the reverse should be the case for the embodiments shown in Figures 3 and 4. The above can be accomplished with the aid of an interference filter designed for oblique incidence. Such a filter can be chosen to transmit and reflect only at desired wavelengths or wavelength ranges and thus separate the viewing path from the laser light path more efficiently.

If a high-power light source producing invisible radiation is used additional protection to the viewer can be afforded by placing a blocking filter between the mirror M and the eyepiece of the microscope.

Finally, a laser providing a collimated beam can be used rather than a separate collimator being provided.

## Claims

1. A microscope provided with a supplementary means for producing a light spot in the object plane of the microscope objective lens, characterised in that the means comprises a light source from which a collimated light beam is derived, a lens, referred to hereafter as focusing lens, receiving the collimated beam and a coupling lens disposed between said focusing lens and the objective lens whereby a light spot is produced from said collimated beam in the object plane of the objective lens, (i) the focal point of the focusing lens being in the plane of the image of a specimen in said object plane as obtained through the objective lens and the coupling lens, (ii) the light beam filling the clear aperture of the objective lens without substantial light loss and (iii) the focusing lens being movable in a plane perpendicular to its axis to displace the light spot in the object plane of the objective lens, the parameters of the system being such that the axial ray of light from said light source always passes through the second principal point (i.e that on the object side) of the objective lens.

2. A microscope according to claim 1, characterised in that the focusing lens and the light source are movable together perpendicularly to said axis.

3. A microscope according to claim 1 characterised in that the focusing lens and the second (object side) principal point of the microscope objective lens are in the conjugate planes of the coupling lens.

4. A microscope according to claim 2, characterised in that the second (object side) principal point of the microscope objective lens coincides with the second focal point of the coupling lens.

5. A microscope according to any one of claims 1 to 4, characterised in that said light source is a laser source and a light-splitting mirror characterised by wavelength-dependent reflectance is disposed between the coupling lens and the objective lens so that the laser light and the visible light from a specimen in the object plane have a common path between the mirror and the objective lens and the majority of one of said lights is transmitted by the mirror while the other light is reflected by the mirror.

Fig. 1

LASER

COLLI-
MATOR

XYZ
TRANSLATION
STAGE

L 1

$f_1$

d

F

FILTER

L 2

M

EYEPIECE
LENS

d'

M O

OBJECT PLANE
(SPECIMEN)

S

Fig. 2

Fig. 3

Fig. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 460 880 (HENDERSON) * Columns 1-2; column 3, lines 1-46; fig. * | 1,3,5 | G 02 B 21/06 G 02 B 21/00 |
| A | US-A-4 523 799 (DELHAYE et al.) * Column 1; column 2, lines 1-11; column 3, lines 5-68; column 4, lines 1-50; figures 1-3b * | 1,5 | |
| A | DE-A-2 443 167 (GESELLSCHAFT FÜR STRAHLEN- UND UMWELTFORSCHUNG) * Page 2, paragraphs 3-6; page 3, paragraph 1; figure 1 * | 1,5 | |

| | |
|---|---|
| | TECHNICAL FIELDS SEARCHED (Int. Cl.5) |
| | G 02 B |

The present search report has been drawn up for all claims

| Place of search | Date of completion of the search | Examiner |
|---|---|---|
| THE HAGUE | 10-07-1991 | WARD S.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)